# EUROPÄISCHE PATENTSCHRIFT

(11) **EP 0 971 225 B1**
(45) Veröffentlichungstag und Bekanntmachung des Hinweises auf die Patenterteilung: **23.04.2003**
(21) Anmeldenummer: 99113119.4
(22) Anmeldetag: 07.07.1999
(51) Int. Cl.: G01N 21/17, G01N 27/00, G01N 31/10

(54) **Verfahren zum Nachweis eines Produktes im Abstrom eines katalytischen Materials einer Vielzahl von katalytischen Materialien**
Device for detecting a product in the exhaust flow of a catalyst material of a plurality of catalyst materials
Dispositif de détection d'un produit dans l'écoulement d'échappement d'une matière catalytique d'une pluralité de matières catalytiques

(30) Priorität: 09.07.1998 DE 19830607
(43) Veröffentlichungstag der Anmeldung: 12.01.2000
(73) Patentinhaber: HTE GmbH, The high throughput experimentation company, 55116 Mainz (DE)
(72) Erfinder: Brenner, Armin, Dr., 65288 Spiesheim (DE); Lange de Oliveira, Armin, 45468 Mühlheim (DE); Schüth, Ferdi, Prof. Dr., 45470 mühlheim (DE); Schunk, Stephan, Dr., 65934 Frankfurt/Nied (DE); Stichert, Wolfram, Dr., 69124 Heidelberg-Kirchheim (DE); Unger, Klaus, Prof. Dr., 64342 Seeheim-Jugenheim (DE)
(74) Vertreter: Ricker, Mathias, Dr.

(56) Entgegenhaltungen:
- WO-A-91/01001
- WO-A-97/32208
- DE-A- 19 724 655
- US-A- 5 411 709
- EULITZ C.M. ET AL: 'Fachlexikon ABC Chemie', 1979, VERLAG HARRI DEUTSCH, THUN, FRANKFURT/MAIN
- FALBE J., REGITZ M.: 'Römpp-Chemie-Lexikon', 1992, THIEME VERLAG, STUTTGART, NEW YORK
- TRIGG I. ET AL.: 'Encyclopedia of applied physics', 1992, VCH PUBLISHERA, NEW YORK, WEINHEIM , CAMBRIDGE

## Beschreibung

Die Erfindung betrifft ein Verfahren zum Nachweis eines Produktes im Abstrom eines katalytischen Materials einer Vielzahl von katalytischen Materialien, die einem Reaktionsgas ausgesetzt sind.

Die Entwicklung neuer, besonders leistungsfähiger Katalysatoren ist für die Verbesserung der Ausbeute vieler Standardverfahren notwendig. Zur Herstellung und Charakterisierung von Katalysatoren werden die potentiell aktiven Träger- und Katalysatorkomponenten in vermeintlich geeigneter Weise kombiniert und die so geschaffenen Mehrkomponentengemische mit einer geeigneten Testreaktion unter bestimmten, meist durch technische Limitierungen festgesetzten Bedingungen getestet. Während die Synthese solcher Materialien oft noch mit zeitlich überschaubarem Aufwand bewältigt werden kann, stellt die Erprobung der Katalysatoren hingegen einen sehr zeit- und arbeitsaufwendigen Schritt dar. Im allgemeinen wird das zu testende Material in einen eigens hierfür konzipierten Labortestreaktor eingefüllt und unter vorgegebenen Parametern auf seine Tauglichkeit für die jeweilige Umsetzung eines Eduktgemisches getestet.

Zur Charakterisierung von Katalysatoren werden zumeist gaschromatographische oder spektroskopische Methoden angewandt. Für das gleichzeitige Testen vieler Katalysatoren sind diese Methoden jedoch nur bedingt geeignet. Während die Gaschromatographie den Nachteil hat, eine gewisse Zeitdauer zu benötigen, haben die spektroskopischen Methoden den Nachteil, bei komplizierteren Reaktionen ungenügende Aussagen über die Selektivitäten der Katalysatoren zu geben. Beide Methoden haben zusätzlich den Nachteil, nur sequenziell zu funktionieren und eine aufwendige und kostspielige Analytik zu beinhalten.

Trotzdem wurden Fortschritte in der Anwendbarkeit beider Methoden erzielt. Durch den Computer-kontrollierten Zusammenschluß mehrerer Säulen wurde bespielsweise eine Erhöhung der Analysenqualität und der Analysengeschwindigkeit bei der Gaschromatographie erreicht (Stockinger, J.H., Callen, R.B., Kaufman, W.E., J.Chromatogr.Sci. 16, 1978, 418).

Im Zusammenhang mit einem Verfahren zum Untersuchen von chemischen Reaktionen in parallel geschalteten Reaktoren ist die Anwendung von spektroskopischen Methoden zur Charakterisierung der Proben beschrieben (Windhab, N., Miculka, C., Hoppe, H.-U., DE 196 32 779).

Ebenfalls veröffentlicht ist eine Methode, Katalysatorpellets mit Hilfe der Infrarot-Thermographie zu testen (Moates, F.C., Somani, M., Annamalai, J., Richardson, J.T., Luss, D., Willson, R.C., Ind. Eng. Chem. Res. 35, 1996, 4801). Diese Methode ist jedoch auf Reaktionen mit großer Wärmetönung limitiert. Ein zusätzlicher Nachteil dieser Methode liegt darin, daß z.B. bei Partialoxidationen der heißeste Katalysator nicht derjenige mit der größten Selektivität auf das gewünschte Produkt hin ist.

Die WO 97/32208 beschreibt ein Katalysator-Testverfahren, in dem eine Vielzahl von verschieden zusammengesetzten Katalysatoren in Form von Pellets o. ä. in einem Multizellenhalter angeordnet sind und mit einem Zustrom eines Gemisches kontaktiert werden. Die Messung erfolgt sprektroskopisch, thermographisch oder an Hand sonstiger gängiger Meßverfahren, wobei die Messung stets direkt an den Katalysatoren vorgenommen wird.

In der DE 196 33 779 A1 ist ein Verfahren zum Untersuchen chemischer Reaktionen in parallel geschalteten, miniaturisierten Reaktoren beschrieben. Das zugeführte Edukt wird an jeweils einem Katalysator vorbeigeführt, wodurch ein Reaktionsgemisch entsteht, welches wiederum in jeweils eine Küvettenbohrung geleitet und über diese ausgeschieden wird. Zur Messung erstreckt sich ein Infrarotstrahl durch jeweils eine der Küvettenbohrungen, die nach Art eine nxn-Matrix angeordnet sind.

In Anbetracht des Standes der Technik ist es nun Aufgabe der vorliegenden Erfindung, ein wirtschaftlich durchführbares Verfahren zum Nachweis eines Produktes im Abstrom eines katalytischen Materials einer Vielzahl von katalytischen Materialien, die einem Reaktionsgas ausgesetzt sind, zur Verfügung zu stellen, um die Selektivität und Aktivität der katalytischen Materialien festzustellen.

Weiterhin ist es Aufgabe der Erfindung, ein möglichst kostengünstiges, einfaches und effektives Verfahren zum Testen katalytischer Materialien anzugeben.

Des weiteren soll das Verfahren ohne größeren Zeit- und Arbeitsaufwand durchführbar sein.

Gelöst werden diese Aufgaben sowie weitere nicht explizit genannte Aufgaben, die jedoch aus den hierin diskutierten Zusammenhängen ohne weiteres ableitbar oder erschließbar sind, durch die im Anspruch 1 beschriebenen Maßnahmen. Zweckmäßige Abwandlungen des erfindungsgemäßen Verfahrens werden in den auf Anspruch 1 rückbezogenen Unteransprüchen unter Schutz gestellt.

Dadurch, daß man ein für das zu bestimmende Produkt selektives Adsorbens im Abstrom jedes katalytischen Materials zur Verfügung stellt, das zumindest eine seiner Eigenschaften durch den Kontakt mit dem zu bestimmenden Produkt ändert und anschließend die Änderung der Eigenschaft des Adsorbens feststellt, gelingt es die Selektivität und Aktivität der katalytischen Materialien festzustellen.

Zum einen ist das Verfahren kostengünstig und effektiv, zum anderen läßt sich das Verfahren ohne größeren Zeit- und Arbeitsaufwand durchführen.

Die Anordnung zur Analyse kann räumlich vom katalytischen Material getrennt sein. Daher kann die Analyse der Produkte auch durch Methoden erfolgen, die unter den Reaktionsbedingungen der katalytischen Umsetzung nicht anwendbar sind, weil beispielsweise das Adsorbens nicht bei den Temperaturen stabil ist, bei denen die katalysierte Reaktion stattfinden muß. Falls das Adsorbens durch die gewählten Reaktionsbedingungen nicht zerstört wird, kann es aber auch dem katalytischen Material räumlich sehr nahe sein.

Durch geeignete Anordnung verschiedener Adsorbentien können unterschiedliche Produkte der katalytischen Reaktion gleichzeitig bestimmt werden. Somit ist es auf sehr elegante Weise möglich, neben der Aktivität eines katalytischen Materials hinsichtlich eines gewünschten Produkts auch die Konzentration an unerwünschten Nebenprodukten zu bestimmen, so daß auch die Selektivität des katalytischen Materials bestimmt werden kann.

Bevorzugte Ausführungsformen des erfindungsgemäßen Verfahrens zeichnen sich dadurch aus, daß das Adsorbens ein Festkörper oder eine auf einem festen Träger aufgebrachte Flüssigkeit ist.

Vorzugsweise ändert sich durch den Kontakt mit dem zu bestimmenden Produkt eine optische Eigenschaft, insbesondere im infraroten, sichtbaren oder ultravioletten Bereich.

Besonders bevorzugt tritt durch den Kontakt des Adsorbens mit dem zu bestimmenden Produkt der katalytischen Umsetzung eine Farbänderung auf, so daß beispielsweise eine Farbbildung oder eine Entfärbung festgestellt werden kann.

Es ist des weiteren bevorzugt, daß die sich durch den Kontakt mit dem zu bestimmenden Produkt ändernde Eigenschaft des Adsorbens eine Fluoreszenz ist.

Eine weitere Eigenschaft die sich durch den Kontakt mit dem zu bestimmenden Produkt ändern kann, ist das Gewicht des Adsorbens.

Eine weiterhin bevorzugte Abwandlung des erfindungsgemäßen Verfahrens verwendet die Temperatur des Adsorbens zur Bestimmung eines Produkts der katalytischen Reaktion.

Eine weitere Eigenschaft des Adsorbens, die sich durch den Kontakt mit dem zu bestimmenden Produkt ändern kann, ist der Brechungsindex einer auf einen festen Träger aufgebrachten Flüssigkeit.

Des weiteren ist der pH-Wert des Adsorbens eine Eigenschaft, die sich durch deo Kontakt mit dem zu bestimmenden Produkt ändern kann, insbesondere wenn das Adsorbens eine auf einen festen Träger aufgebrachte Flüssigkeit ist.

Besonders bevorzugt tritt eine Änderung der Leitfähigkeit des Adsorbens durch den Kontakt mit dem zu bestimmenden Produkt auf.

Hierbei kann das zu bestimmende Produkt auch aus dem Adsorbens mit Hilfe eines Lösungsmittels herausgelöst werden, wonach eine Eigenschaft, wie beispielsweise der Brechungsindex, der pH-Wert und die Leitfähigkeit, der so erhaltenen Lösung bestimmt wird.

Bevorzugte Ausführungsformen des erfindungsgemäßen Verfahrens zeichnen sich dadurch aus, daß das zu bestimmende Produkt Maleinsäureanydrid und das Adsorbens ein in ethanolischer Lösung auf ein Filterpapier aufgebrachtes N,N-Dimethylindoanilin ist, wobei sich die Farbe des Adsorbens beim Kontakt mit dem Maleinsäureanydrid von blau nach farblos ändert.

Bei einer bevorzugten Ausführungsform eines oben beschriebenen Adsorbens werden reaktive Gruppen, die in der Lage sind, im Abstrom eines Parallelreaktors selektiv mit einem gewünschten Produkt zu reagieren, auf einem festen Träger aufgebracht.

Bei einer weiteren bevorzugten Ausführungsform werden reaktive Moleküle, die selektiv mit einem gewünschten Produkt reagieren können, in einem Lösungsmittel gelöst, wonach dieses auf einem festen Träger aufgebracht wird.

Unter Nachweis eines Produktes soll im Rahmen der vorliegenden Erfindung jegliche Identifizierung eines chemischen Elementes, einer chemischen Verbindung oder einer funktionellen Gruppe verstanden werden, die bei einer katalytischen Reaktion gebildet werden.

Es kann sich hierbei beispielsweise um eine Verbindung handeln, deren Bildung durch die katalytische Umsetzung optimiert werden soll.

Es ist aber auch denkbar, daß eine Verbindung bestimmt wird, die bei der Bildung des gewünschten Produktes zwangsläufig entsteht. Hierzu gehört unter anderem beispielsweise Wasserstoff, der bei einer Dehydrierung frei wird.

Durch das erfindungsgemäße Verfahren können aber auch Stoffe nachgewiesen werden, deren Bildung vermieden werden soll, also Nebenprodukte einer katalytischen Umsetzung.

Ein katalytisches Material ist ein Stoff, der die Aktivierungsenergie zum Ablauf einer bestimmten Reaktion herabsetzen und dadurch die Reaktionsgeschwindigkeit erhöht, ohne im Endprodukt der Reaktion zu erscheinen. Unter Stoff sind hierbei beispielsweise Elemente und Verbindungen sowie homogene und heterogene Mischungen hiervon zu verstehen. Gerade binäre oder ternäre Mischungen von Elementen und/oder Verbindungen zeigen häufig eine unerwartet hohe katalytische Wirkung, die nur durch Empirie festgestellt werden kann.

Das erfindungsgemäße Verfahren ermöglicht, daß viele katalytische Materialien, die sich in ihrer Zusammensetzung unterscheiden, unter identischen Reaktionsbedingungen gleichzeitig untersucht werden können. Erfindungswesentlich ist hierbei, daß der Abstrom eines katalytischen Materials einer Änderung der Eigenschaft des Adsorbens zugeordnet werden kann. Hierfür kann es unter Umständen erforderlich sein, daß die Abströme der jeweiligen katalytischen Materialien von einander getrennt gehalten werden. Die Vielzahl der katalytischen Materialien, also mindestens zwei, können beispielsweise in Parallelreaktoren eingebracht werden.

Unter Abstrom wird das Gasgemisch nach dem Kontakt mit einem katalytischen Material verstanden, das zumindest ein Reaktionsprodukt enthalten kann. Das Reaktionsgas ist ein Gas, das den oder die Reaktanten enthält. Es kann zusätzlich Inertgase aufweisen, wie beispielsweise Stickstoff oder Edelgase (insbesondere Helium, Neon, Argon oder Mischungen dieser Gase), um beispielsweise die Reaktionsführung zu verbessern.

Unter Reaktant wird hierbei der Ausgangsstoff oder die Ausgangsstoffe einer katalytischen Umsetzung verstanden. Bei einer Dehydrierung kann dies beispielsweise ein Alkan, wie Ethan sein. Bei anderen Reaktionen, wie beispielsweise einer Hydrierung oder einer Partialoxidation, sind mindestens zwei Reaktanten notwendig, wie beispielsweise Wasserstoff und ein Alkin bei einer Hydrierung, oder Sauerstoff und ein Alkan, wie n-Butan bei einer Partialoxidation.

Selektivität ist die Fähigkeit des Absorbens aus einer Anzahl gebotener Verbindungen in dem Abstrom des Reaktionsgases eines bevorzugt auszuwählen.

Adsorbens bezeichnet einen Stoff, der befähigt ist, bestimmte Stoffe aus gasförmigen Mischungen an seiner Grenzfläche anzureichern oder in sich aufzunehmen, was mit einer Volumenvergrößerung verbunden sein kann. Das Adsorbens kann ein Feststoff oder eine Mischung von Feststoffen, wie beispielsweise Aktivkohle, Aluminiumoxid, Kieselgel, Ruß, Zeolith, oder Flüssigkeit sein, die auf einen festen Träger aufgebracht ist, wie z. B. eine ethanolische Lösung von N,N-Dimethylindoanilin, welche auf Filterpapier aufgebracht wird. Diese Stoffe können auch als Mischung verwendet werden. Es ist möglich das Adsorbens mit reaktiven Gruppen zu versehen oder mit Stoffen zu beladen, um so eine selektive Eigenschaftsänderung durch Kontakt mit dem zu bestimmenden Produkt herbeizuführen.

Eigenschaften bezeichnen Merkmale des Adsorbens, welche sich durch den Kontakt mit dem zu bestimmenden Produkt ändern. Hierzu gehören unter anderem optische Eigenschaften, insbesondere im infraroten, sichtbaren oder ultravioletten Bereich des Spektrums, also Farbänderungen, die auf den Kontakt des Produktes mit dem Adsorbens zurückzuführen sind, wie ein Entstehen von Farbe oder eine Entfärbung, das Gewicht des Adsorbens, die Temperatur, die Fluoreszenz, der Brechungsindex, der pH-Wert oder die Leitfähigkeit.

Die durch den Kontakt mit dem zu bestimmenden Produkt auftretende Eigenschaftsänderung muß erfindungsgemäß festgestellt werden. Je nach Eigenschaft kann dies beispielsweise visuell oder durch Messung erfolgen. Hierbei ist es notwendig, die Meßmethode der Eigenschaftsänderung anzupassen. Eine Temperaturänderung des Adsorbens, die durch eine spezifische exotherme Reaktion beruht, kann beispielsweise durch eine Infrarotkamera bestimmt werden. Die Bestimmung kann in den meisten Fällen auch automatisiert werden.

Im folgenden wird ein Ausführungsbeispiel einer Anordnung zum Testen der katalytischen Aktivität von einem Reaktionsgas ausgesetzten Feststoffen, unter Bezugnahme auf die Zeichnungen näher erläutert.

Es zeigen:
- Figur 1: die Versuchseinheit der Anordnung zum Testen der katalytischen Aktivität von einem Reaktionsgas ausgesetzten Feststoffen in geschnittener Darstellung,
- Figur 2: einen Schnitt durch die Versuchseinheit entlang der Linie II-II von Figur 1,

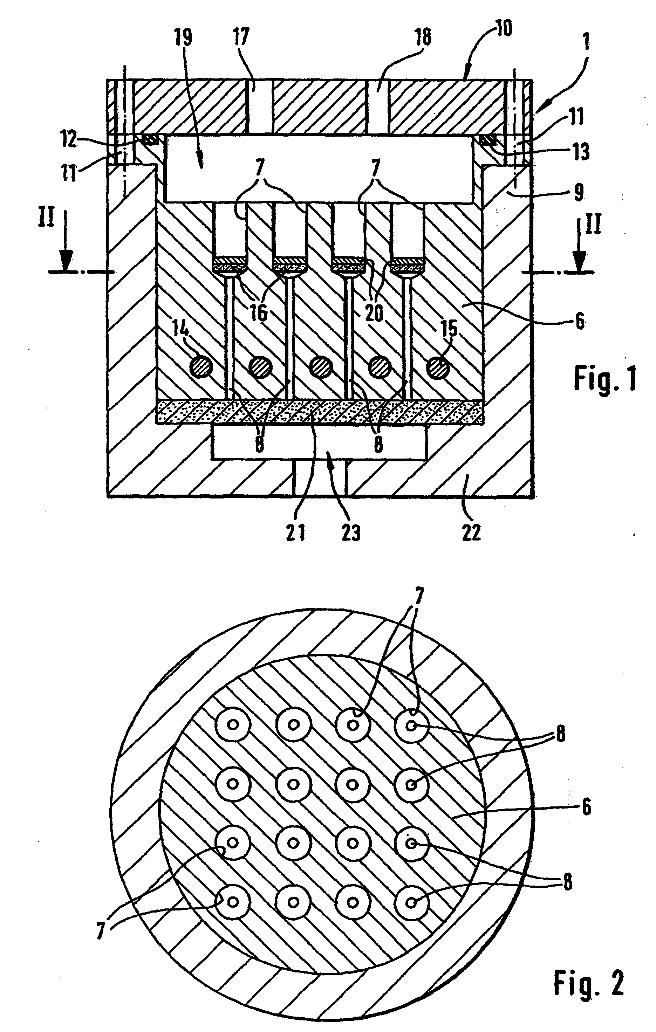

Figur 1 zeigt einen Schnitt durch die Versuchseinheit 1 der Testanordnung. Die Versuchseinheit 1 weist einen zylindrischen Körper 6 aus wärmeleitendem Material, vorzugsweise Messing auf, der an seiner Oberseite mit zylindrischen Bohrungen 7 versehen ist, die in Form einer n x m Matrix mit vier Zeilen und vier Spalten angeordnet sind (Figur 2). Eine 4 x 4 Matrix ist nur beispielhaft angegeben, es sind auch Anordnungen mit einer wesentlich größeren Anzahl von Ausnehmungen möglich.

Am Boden jeder Ausnehmung 7 ist ein Kanal 8 angeschlossen, der an der Unterseite des Messingkörpers 6 an einer porösen Platte 21 endet. Die Kanäle 8 verlaufen parallel zueinander in vertikaler Richtung. Sie haben einen kleineren Durchmesser als die Ausnehmungen. Dies stellt ähnliche Flüsse durch alle Ausnehmungen sicher, da die Kanäle die jeweiligen Hauptströmungswiderstände darstellen. Die einzelnen Kanäle können auch gezielt verengt werden, um in allen Ausnehmungen exakt die gleichen Flüsse einzustellen. Hierzu können in der Versuchseinheit entsprechende Drosseleinrichtungen oder dgl. vorgesehen sein.

An der Oberseite des Messingkörpers 6 ist ein Flansch 9 zur Befestigung eines Deckels 10 aus wärmeleitendem Material, vorzugsweise Messing, angesetzt. Flansch 9 und Deckel 10 weisen mehrere umfangsmäßig verteilt angeordnete Bohrungen 11 auf, so daß der Deckel fest mit dem Messingkörper verschraubt werden kann (Figur 3). Zur Abdichtung des Deckels 10 gegenüber dem Flansch 9 ist eine Ringdichtung 12 vorgesehen, die in einer Ringnut 13 des Flansches 9 sitzt.

Der Messingkörper 6 und der Deckel 10 weisen Bohrungen 14 zur Aufnahme von Heizpatronen 15 einer Heizeinrichtung auf, um die Versuchseinheit 1 auf die Reaktionstemperatur aufheizen zu können. Die Bohrungen 14 könne ebenfalls zur Aufnahme von Kühlelementen dienen, so daß eine reproduzierbare und kontrollierte Temperaturführung sichergestellt werden kann.

An der Unterseite des Messingkörpers 6 ist ein Boden 22 aus wärmeleitendem Material, vorzugsweise Messing, angesetzt. Dieser Boden 22 kann ebenfalls mit dem Flansch 9 verschraubt werden.

Der Boden 22 dient zur Befestigung der porösen Platte 21, welche das erfindungsgemäße Adsorbens aufnehmen kann. Der Boden 22 weist eine Bohrung 23 auf, über die das Reaktionsgas, welches aus den Kanälen 8 durch die Platte 21 strömt, abgeleitet werden kann.

Die zu untersuchenden Katalysatoren sitzen jeweils auf einem Plättchen 16 aus einer porösen Innertmasse (Fritte), das am Boden jeder Ausnehmung quer zu deren Längsachse angeordnet ist.

Zum gleichzeitigen Testen der Katalysatoren wird der Deckel 10 mit dem Flansch 9 des Messingkörpers 6 verschraubt und über in dem Deckel vorgesehene Bohrungen 17, 18 wird das Reaktionsgas in die oberhalb der Ausnehmungen 7 befindliche Gaszufuhrkammer 19 geleitet. Das Reaktionsgas durchströmt die auf den Fritten 16 sitzenden Katalysatoren 20 und wird über die Kanäle 8 abgeführt. Am Ende dieser Kanäle 8 befindet sich das erfindungsgemäße Adsorbens, welches beispielsweise auf einer Platte 21 aus einer porösen Innertmasse (Fritte) aufgebracht werden kann, das in den Boden des Messingkörpers 6 eingelegt wird. Anschließend wird das Reaktionsgas über die Bohrung 23 abgeführt.

Die katalytische Umsetzung des Reaktionsgases kann beispielsweise bei Temperaturen im Bereich von -50°C bis 600 °C und bei Drücken im Bereich von 10⁻³ bis 1000 bar durchgeführt werden.

Es ist möglich das erfindungsgemäße Verfahren zu automatisieren. Hierfür kann sowohl das Beschicken der Reaktoren mit Katalysatoren, beispielsweise durch Laborroboter oder einer eigens dafür vorgesehenen Beschickungseinheit, als auch das Feststellen der Eigenschaftsänderung des Adsorbens, beispielsweise durch digitale Fotografie und anschließende computergestützte Auswertung, maschinell erfolgen.

Das erfindungsgemäße Verfahren kann beispielsweise für den Nachweis von Produkten bei Partialoxidationen, wie z.B. von n-Butan oder Benzol, oder bei Hydrierungsreaktionen, wie z.B. von Alkinen, angewendet werden. Auch bei Dehydrogenierungsreaktionen, z.B. von Alkanen, Hydroformulierungsreaktionen von Alkenen, Aminierungs- oder Acylierungsreaktionen ist die Anwendung dieser Methode vorteilhaft. Auch die Produkte von Oligomerisierungs- und Polymerisationsreaktionen können mit der beschriebenen Methode nachgewiesen werden.

In einer speziellen Anwendung wird Maleinsäureanhydrid aus dem Abstrom einer Partialoxidation von n-Butan in parallelen Reaktoren nachgewiesen. Hierfür wird ein Filterpapier mit einer ethanolischen Lösung von N,N-Dimethylindoanilin getränkt und mit dem Abstrom des katalytischen Tests in Kontakt gebracht. Bei der Anwesenheit von Maleinsäureanhydrid ändert sich die Farbe des Filterpapiers von blau nach farblos, was auf eine Diels-Alder-Reaktion des Maleinsäureanhydrids mit dem N,N-Dimethylindoanilins unter Verlust dessen konjugierten pi-Elektronensystems zurückzuführen ist.

## Patentansprüche

1. Verfahren zum Nachweis eines Produktes im Abstrom eines katalytischen Materials einer Vielzahl von katalytischen Materialien, die einem gemeinsamen Zustrom eines Reaktionsgases gleichzeitig ausgesetzt sind, **dadurch gekennzeichnet, daß** der Abstrom jedes katalytischen Materials simultan einem gemeinsamen Adsorbens einzeln zugeführt wird, das für das zu bestimmende Produkt selektiv ist und zumindest eine seiner Eigenschaften durch den Kontakt mit dem zu bestimmenden Produkt ändert und anschließend die Änderung der Eigenschaft des Adsorbens festgestellt wird, wobei das Adsorbens ein Stoff ist, der befühigt ist, bestimmte Stoffe aus gasförmigen Mischungen an seiner Grenzfläche anzureichern oder in sich aufzunehmen, was mit einer Volumentergrößerung verbunden sein kann.

2. Verfahren nach Anspruch 1, **dadurch gekennzeichnet, daß** das Adsorbens ein Festkörper oder eine Flüssigkeit ist, wobei das flüssige Adsorbens auf einem festen Träger aufgebracht ist.

3. Verfahren nach Anspruch 1 und 2, **dadurch gekennzeichnet, daß** die sich durch den Kontakt mit dem zu bestimmenden Produkt ändernde Eigenschaft des Adsorbens eine optische Eigenschaft, insbesondere im infraroten, sichtbaren oder ultravioletten Bereich, ist

4. Verfahren nach Anspruch 3, **dadurch gekennzeichnet, daß** die optische Eigenschaft eine Farbänderung, insbesondere ein Entstehen von Farbe oder eine Entfärbung ist.

5. Verfahren nach Anspruch 1 oder 2, **dadurch gekennzeichnet, daß** die sich durch den Kontakt mit dem zu bestimmenden Produkt ändernde Eigenschaft des Adsorbens eine Fluoreszenz ist.

6. Verfahren nach Anspruch 1 oder 2, **dadurch gekennzeichnet, daß** die sich durch den Kontakt mit dem zu bestimmenden Produkt ändernde Eigenschaft des Adsorbens das Gewicht ist.

7. Verfahren nach Anspruch 1 oder 2, **dadurch gekennzeichnet, daß** die sich durch den Kontakt mit dem zu bestimmenden Produkt ändernde Eigenschaft des Adsorbens die Temperatur ist.

8. Verfahren nach Anspruch 2, **dadurch gekennzeichnet, daß** die sich durch den Kontakt mit dem zu bestimmenden Produkt ändernde Eigenschaft des flüssigen Adsorbens der Brechungsindex ist.

9. Verfahren nach Anspruch 2, **dadurch gekennzeichnet, daß** die sich durch den Kontakt mit dem zu bestimmenden Produkt ändernde Eigenschaft des flüssigen Adsorbens der pH-Wert ist.

10. Verfahren nach Anspruch 1 oder 2, **dadurch gekennzeichnet, daß** die sich durch den Kontakt mit dem zu bestimmenden Produkt ändernde Eigenschaft des Adsorbens die Leitfähigkeit ist.

11. Verfahren nach Anspruch 1 bis 4, **dadurch gekennzeichnet, daß** das zu bestimmende Produkt Maleinsäureanydrid und das Adsorbens N,N-Dimethylindoanilin ist, das in ethanolischer Lösung auf ein Filterpapier aufgebracht ist, wobei sich die Farbe des Adsorbens beim Kontakt mit dem Maleinsäureanydrid von blau nach farblos ändert.

## Claims

1. Method of detecting a product in the outflow stream from a catalytic material for a multiplicity of catalytic materials which are simultaneously exposed to a common feed stream of a reaction gas, **characterised in that** the outflow stream from each catalytic material is fed individually to a common adsorbent which is selective for the product to be determined and changes at least one of its properties on contact with the product to be determined and the change in the property of the adsorbent is subsequently ascertained, where the adsorbent is a material which is capable of accumulating certain substances from gaseous mixtures on its surface or taking them up in itself, which can be associated with an increase in volume.

2. Method according to claim 1, **characterized in that** the adsorbent is a solid or a liquid and in the case of a liquid adsorbent has been applied to a solid support.

3. Method according to claim 1 or 2, **characterized in that** the property of the adsorbent which changes on contact with the product to be determined is an optical property, in particular in the infrared, visible or ultraviolet region.

4. Method according to claim 3, **characterized in that** the optical property is a colour change, in particular a development of a colour or a decolourization.

5. Method according to claim 1 or 2, **characterized in that** the property of the adsorbent which changes on contact with the product to be determined is a fluorescence.

6. Method according to claim 1 or 2, **characterized in that** the property of the adsorbent which changes on contact with the product to be determined is the weight.

7. Method according to claim 1 or 2, **characterized in that** the property of the adsorbent which changes on contact with the product to be determined is the temperature.

8. Method according to claim 2, **characterized in that** the property of the liquid adsorbent which changes on contact with the product to be determined is the index of refraction.

9. Method according to claim 2, **characterized in that** the property of the liquid adsorbent which changes on contact with the product to be determined is the pH.

10. Method according to claim 1 or 2, **characterized in that** the property of the adsorbent which changes on contact with the product to be determined is the conductivity.

11. Method according to any of claims 1 to 4, **characterized in that** the product to be determined is maleic anhyride and the adsorbent is N,N-dimethylindoaniline which has been applied in ethanolic solution to a filter paper, with the colour of the adsorbent changing from blue to colourless on contact with the maleic anhyride.

## Revendications

1. Catalytique d'une multiplicité de substances catalytiques qui sont exposées simultanément à un courant affluent d'un gaz de réaction commun, **caractérisé en ce que** l'effluent de chaque substance catalytique est envoyé individuellement, simultanément, à un adsorbant commun qui est sélectif pour le produit à déterminer et est modifié en au moins une de ses propriétés par le contact avec le produit à déterminer et on détermine ensuite la modification de la propriété de l'adsorbant, l'adsorbant étant une substance capable de fixer en soi ou de concentrer à sa surface certaines substances provenant de mélanges gazeux, ce qui peut être en relation avec une augmentation de volume.

2. Procédé selon la revendication 1, **caractérisé en ce que** l'adsorbant est un solide ou un liquide, l'adsorbant liquide étant appliqué sur un support solide.

3. Procédé selon la revendication 1 et la revendication 2, **caractérisé en ce que** la propriété de l'adsorbant qui se modifie par le contact avec le produit à déterminer est une propriété optique, en particulier dans la région infrarouge, visible ou ultraviolette.

4. Procédé selon la revendication 3, **caractérisé en ce que** la propriété optique est un changement de couleur, en particulier une apparition de coloration ou une décoloration.

5. Procédé selon la revendication 1 ou la revendication 2, **caractérisé en ce que** la propriété de l'adsorbant qui se modifie par le contact avec le produit à déterminer est une fluorescence.

6. Procédé selon la revendication 1 ou la revendication 2, **caractérisé en ce que** la propriété de l'adsorbant qui se modifie par le contact avec le produit à déterminer est le poids.

7. Procédé selon la revendication 1 ou la revendication 2, **caractérisé en ce que** la propriété de l'adsorbant qui se modifie par le contact avec le produit à déterminer est la température.

8. Procédé selon la revendication 2, **caractérisé en ce que** la propriété de l'adsorbant liquide qui se modifie par le contact avec le produit à déterminer est l'indice de réfraction.

9. Procédé selon la revendication 2, **caractérisé en ce que** la propriété de l'adsorbant liquide qui se modifie par le contact avec le produit à déterminer est le pH.

10. Procédé selon la revendication 1 ou la revendication 2, **caractérisé en ce que** la propriété de l'adsorbant qui se modifie par le contact avec le produit à déterminer est la conductivité.

11. Procédé selon l'une quelconque des revendications 1 à 4, **caractérisé en ce que** le produit à déterminer est l'anhydride maléique et l'adsorbant est la N,N-diméthylindoaniline, qui est appliquée en solution éthanolique sur un papier-filtre, la couleur de l'adsorbant passant du bleu à l'incolore au contact avec l'anhydride maléique.
